# EUROPEAN PATENT SPECIFICATION

(11) **EP 0 553 173 B1**
(45) Date of publication and mention of the grant of the patent: **20.12.1995**
(21) Application number: 91918138.8
(22) Date of filing: 04.10.1991
(51) Int. Cl.: C01D 3/04, B01F 1/00

(54) **PLANT FOR PREPARING A SALINE SOLUTION**
ANLAGE ZUR HERSTELLUNG EINER SALZLÖSUNG
INSTALLATION DE PREPARATION D'UNE SOLUTION SALINE

(30) Priority: 11.10.1990 SE 9003242
(43) Date of publication of application: 04.08.1993
(73) Proprietor: AKTIEBOLAG HANSON & MÖHRING, S-301 04 Halmstad (SE)
(72) Inventor: JOHANSSON, Lennart, S-510 11 Kungsäter (SE)
(74) Representative: Wiklund, Erik
(86) International application number: SE9100667
(87) International publication number: WO9206922

(56) References cited:
- DE-A- 3 008 563
- GB-A- 2 048 107
- DERWENT'S ABSTRACT, No. 89-240 485/33; & SU,A,1459698, publ. week 8933.

## Description

The present invention relates to a plant for preparing a saline solution, including a production unit with a salt bed, and a storage unit for the prepared saline solution.

It is well-known to spread saline solutions on roads to counteract slippery conditions. Initially, dry salt was used, then moistened salt, and now a saturated NaCl solution is directly spread on the road. Using a saline solution instead of dry salt is advantageous in many respects, and, inter alia, involves a higher spreading rate, less salt per road metre, and a rapid effect.

Prior-art plants for preparing a saline solution can be divided into two categories. The first category comprises different sorts of mixing plants where the amount of salt is measured out according to the amount of water. Such plants suffer from many drawbacks in that they must be continuously looked after, and the dissolution of the salt and the mixing of the solution take time.

The second category comprises saturators which are based on the idea that water is conducted through a large amount of salt to produce a saturated solution. Prior-art saturators include a salt bed provided on top of a filter bed which, from the top downwards, consists of gravel and fibre cloth. Water is supplied from above and flows down through the salt bed and the filter bed, so that the saline solution can be taken from the bottom of the bed.

In prior-art saturators, the fresh water employed is often taken from the public system of water pipes. However, a pressure drop may arise in the water pipe, and there is thus a risk that some of the saline solution is drawn into the public water system. This inconvenience may be eliminated by the use of non-return valves or the like, but since the possibility of a defective valve can never be excluded, security would be poor.

Another inconvenience is that the salt contains many different sorts of foreign matter, such as gravel and wood chips, which has got into the salt during transportation. Such foreign matter rapidly clogs the filter bed, which thus has to be desludged and cleaned up fairly often, which means expenses for both the clean-up operation and the idle time.

A further inconvenience of such saturators is that a 'throughflow' may occur, which means that the water supplied from above cuts a tunnel through the salt and then trickles down therethrough, instead of spreading over the entire salt bed and evenly penetrating the salt, as is desirable.

The object of the present invention is to obviate the above inconveniences associated with saturators.

According to the invention, this object is achieved by a plant which is of the type mentioned by way of introduction and which is characterised in that a fresh-water unit for storing fresh water is provided in the plant; that an inlet for supplying fresh water to the fresh-water unit is disposed at a certain distance above the maximum fresh-water level which is determined by a level control; that an inlet for conducting fresh water from the fresh-water unit to the production unit is disposed at the bottom of the production unit; that a pump is arranged to pump fresh water from the fresh-water unit and into the production unit, up through the salt bed; that an outlet for conducting the prepared saline solution from the production unit to the storage unit includes an outlet orifice at the upper part of the production unit and a cage formed with a downwardly-directed opening located below said orifice; and a boundary means extends down into the production unit, to a level below the outlet orifice, such that the level of the salt bed can be located above the level of liquid.

In a preferred embodiment of the invention, there is provided, in the upper part of the production unit, a grating through which the salt passes when supplied and thus is more evenly distributed so that there will be no 'throughflow'.

The invention will be described in more detail below, reference being had to the accompanying drawings of a preferred embodiment of the invention. In the drawings,
Fig. 1 is a schematic longitudinal section of a plant according to the invention,
Fig. 2 is a cross-section of the production unit of the plant according to the invention, as seen in the direction of the storage unit, and
Fig. 3 is a cross-section of the fresh-water unit of the plant according to the invention, as seen in a direction away from the production unit.

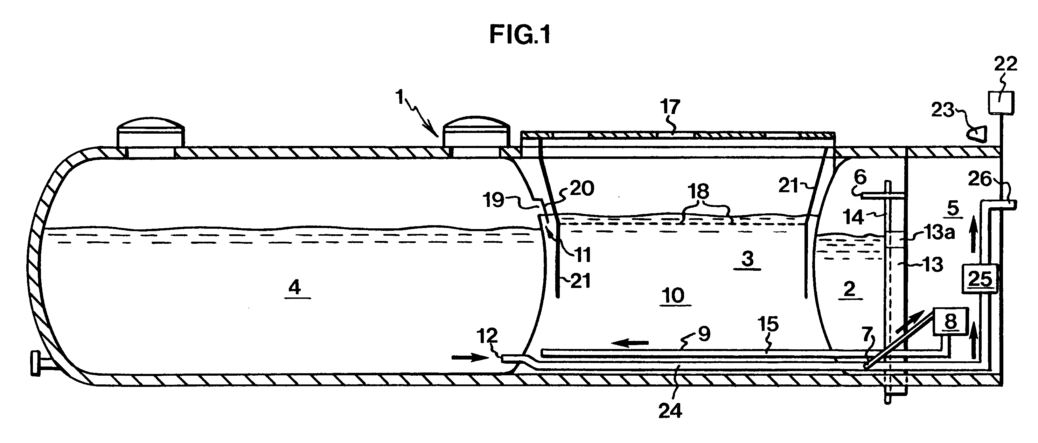

The plant illustrated in Fig. 1 includes a cylindrical tank 1 with a fresh-water unit 2, a production unit 3 and a storage unit 4 for the prepared saline solution. Further, there is provided a machine room 5.

Fresh water from e.g. the public system of water pipes is let into the fresh-water unit 2 through an inlet 6. Then, fresh water is pumped from the fresh-water unit, through an outlet 7 provided at the bottom thereof, to the production unit 3 by means of a pump 8 in the machine room 5. The fresh-water inlet 9 of the production unit 3 is disposed at the bottom of this unit, so that the water is pressed up through a salt bed 10 which takes up substantially the entire production unit 3.

At the upper part of the production unit 3, there is an outlet 11 for the prepared saline solution to be conducted to the storage unit 4. An outlet 12 for the prepared saline solution is provided at the lower part of the storage unit 4. By means of a pump 25, the saline solution is conducted through a tube 24 to an outlet 26 where it is supplied to tank lorries.

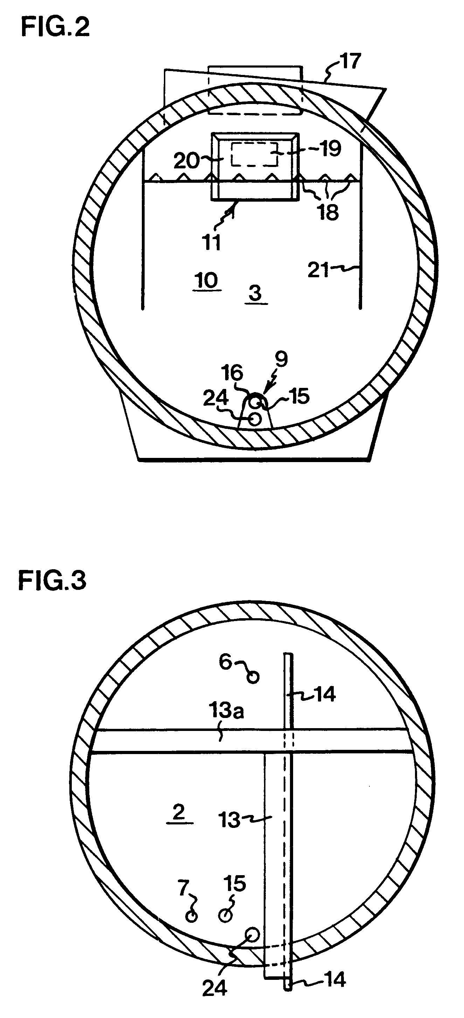

As shown in Figs 1 and 3, the fresh-water inlet 6 of the fresh-water unit 2 is disposed at a certain distance above the highest possible level of fresh water, which is determined by a level control. Further, the level control includes a vertical channel 13 which has a horizontal overflow 13a whose inlet opening is located at a distance below the fresh-water inlet 6 and whose outlet opening ends outside the plant, on a level with the bottom thereof. The distance between the inlet 6 and the inlet opening of the overflow 13a preferably is 50 mm. The dimension of the channel is substantially larger than that of the fresh-water inlet 6. If something should go wrong, the water level cannot rise above the inlet opening of the overflow, and no water can therefore return to the public system of water pipes. In the channel 13, there is provided a ventilation tube 14 whose one opening ends on a level above the fresh-water inlet 6 and whose other opening ends on a level below the outlet opening of the channel 13. Should the channel 13 become so full of water that no air can pass therethrough, air may still enter the fresh-water unit 2 through the ventilation tube 14. In addition, the water in the fresh-water unit 2 has not yet come into contact with the salt, which is a further safe-guard against any of the saline solution entering the public water system.

As mentioned earlier, the fresh-water inlet 9 of the production unit 3 is provided at the bottom of this unit. As is best shown in Fig. 2, the inlet 9 is a tube 15 which extends along substantially the entire production unit and whose upper part is formed with elongate holes in the longitudinal direction, and a semi-circular shield 16 provided above the tube and extending along the entire length thereof. This construction reduces the risk of 'through-flow'.

As shown in Figs 1 and 2, the production unit 3 is, at the top, equipped with an openable door 17 where salt is supplied. The salt passes a grating 18 provided in the upper part of the production unit 3 for even distribution of the salt, so that it becomes easier for the water to pass up through the salt bed 10. Further, the grating 18 contributes to the salt being evenly supplied so that no salt is swept over into the storage unit 4.

The production unit 3 further includes a basket 21 without bottom, which extends from the door 17 down into the production unit and serves to keep the salt away from the side walls of the production unit when supplied, so that water which from below penetrates into the salt bed can escape at the edges thereof.

An outlet 11 for conducting the prepared saline solution from the production unit to the storage unit 4 includes an outlet orifice 19 and a cage 20 extending a certain distance below the lowest edge of the orifice 19. Owing to the position of the orifice in the upper part of the production unit 3 and the provision of the cage 20 around the orifice, there is no foreign matter in the storage unit 4. Heavy foreign matter in the salt sinks and never reaches the outlet orifice, and light foreign matter which floats is prevented from reaching the outlet orifice 19 by the cage 20. Further, the cage 20 prevents the salt from sweeping over into the storage unit when supplied.

The combination of the outlet 11 and the inlet 9, both as to position and construction, makes it possible to dispense with the filter bed and its inconveniences.

To further reduce the risk of salt sweeping over into the storage unit 4, the door 17 has a breaker device for shutting off the water to the production unit 3 when the door is open and does not turn on the water again until three minutes after the door has been closed.

In operation, the liquid level in the production unit 3 is constantly at the lower edge of the orifice 19. The level of the salt bed 10 varies from just below the door 17 after salt has been supplied, to a certain distance below the liquid level.

At the outlet 11, there is provided a sensor for detecting the salt concentration. The sensor tells when there is something wrong with the concentration and interrupts the supply of water to the production unit 3 if the concentration is too low, so that no solution of insufficient concentration can pass into the storage unit 4.

The storage unit 4 includes three level sensors for controlling the saline-solution level and indicating when the level is too high or too low. Two of the sensors are connected to a warning lamp 22 and a sound alarm 23.

The tank 1 is so designed that it can withstand out-door temperatures below Centigrade and inclement weather conditions. The plant operates continuously for preparing the saline solution, and the pumps, the control electronics and power and water outlets are located in the machine room 5. Naturally, inspection doors and manholes are also provided, so that the plant can be cleaned, e.g. at the end of winter.

## Claims

1. A plant for preparing an NaCl solution, including a production unit (3) with a salt bed (10), and a storage unit (4) for the prepared saline solution,
**characterised** in that
a fresh-water unit (2) for storing fresh water is provided in the plant;
an inlet (6) for supplying fresh water to the fresh-water unit (2) is disposed at a certain distance above the maximum fresh-water level which is determined by a level control (13, 13a, 14);
an inlet (9) for conducting fresh water from the fresh-water unit (2) to the production unit (3) is disposed at the bottom of the production unit;
a pump (8) is arranged to pump fresh water from the fresh-water unit (2) and into the production unit (3), up through the salt bed (10), so that a saturated NaCl solution is continuously produced,
an outlet (11) for conducting the prepared NaCl solution from the production unit (3) to the storage unit (4) includes an outlet orifice (19) at the upper part of the production unit and a cage (20) formed with a downwardly-directed opening located below said orifice; and
a boundary means (21) extends down into the production unit, to a level below the outlet orifice (19), such that the level of the salt bed can be located above the level of liquid.

2. The plant of claim 1, **characterised** in that the boundary means (21) includes a basket which has no bottom and extends from the upper part of the production unit.

3. The plant of claim 1 or 2, **characterised** in that the production-unit inlet (9) for fresh water is a tube (15) whose upper part is formed with elongate holes in the longitudinal direction, and a semi-cir-cular shield (16) provided above said tube and extending in the longitudinal direction thereof.

4. The plant of any one of the preceding claims, **characterised** in that the level control includes a channel (13) which has an overflow (13a) whose inlet opening is located at a certain distance below the fresh-water inlet (6) and whose outlet opening ends outside the plant, on a level with the bottom thereof, and that the dimension of the channel (13) is substantially larger than that of the fresh-water inlet (6) of the fresh-water unit (2).

5. The plant of claim 4, **characterised** by the provision, in the channel (13), of a ventilation tube (14) whose one opening ends on a level above the fresh-water inlet (6) of the fresh-water unit (2) and whose other opening ends on a level below the outlet opening of said channel.

6. The plant of any one of the preceding claims, **characterised** in that an outlet (7) for conducting fresh water from the fresh-water unit (2) to the production unit (3) is disposed at the bottom of the fresh-water unit.

7. The plant of any one of the preceding claims, **characterised** by the provision, in the upper part of the production unit, of a grating (18) for the distribution of salt supplied from above.

## Patentansprüche

1. Anlage zur Herstellung einer NaCl-Lösung, umfassend eine Produktionseinheit (3) mit einem Salzbett (10) und eine Speichereinheit (4) für die hergestellte Salzlösung, dadurch gekennzeichnet, daß
eine Frischwassereinheit (2) zum Speichern von Frischwasser in der Anlage vorgesehen ist;
ein Einlaß (6) zum Zuführen von Frischwasser zur Frischwassereinheit in einer bestimmten Entfernung oberhalb des maximalen Frischwasserniveaus, das durch eine Niveaukontrolle (13, 13a, 14) bestimmt ist, vorgesehen ist;
ein Einlaß (9) zum Leiten von Frischwasser von der Frischwassereinheit (2) zur produktionseinheit (3) am Boden der Produktionseinheit angeordnet ist,
eine Pumpe (8) vorgesehen ist, um Frischwasser von der Frischwassereinheit (2) in die Produktionseinheit (3) nach oben durch das Salzbett (10) zu pumpen, so daß eine gesättigte NaCl-Lösung kontinuierlich produziert wird;
ein Auslaß (11) zum Leiten der hergestellten NaCl-Lösung von der produktionseinheit (3) zu der Speichereinheit (4) eine Auslaßöffnung (19) im oberen Teil der Produktionseinheit und einen Käfig (20) umfaßt, der mit einer nach unten gerichteten Öffnung unter dieser Auslaßöffnung (19) angeordnet ist;
und eine Trenneinrichtung (21) sich nach unten in die Produktionseinheit bis zu einem Niveau unter der Auslaßöffnung (19) erstreckt, derart, daß das Niveau des Salzbetts oberhalb des Niveaus der Flüssigkeit angeordnet sein kann.

2. Anlage nach Anspruch 1, dadurch gekennzeichnet, daß die Trenneinrichtung (21) einen Korb ohne Boden umfaßt, der sich vom oberen Teil der Produktionseinheit aus erstreckt;

3. Anlage nach Anspruch 1 oder 2, dadurch gekennzeichnet, daß der Produktionseinheitseinlaß (9) für Frischwasser ein Rohr (15) ist, dessen oberer Teil mit langgestreckten in Längsrichtung verlaufenden Löchern versehen ist, und daß ein halbkreisförmiger Schild (16) oberhalb des Rohrs angeordnet ist und sich in dessen Längsrichtung erstreckt.

4. Anlage nach einem der vorhergehenden Ansprüche, dadurch gekennzeichnet, daß die Niveaukontrolle einen Kanal (13) umfaßt, der einen Überlauf (13a) aufweist, dessen Einlaßöffnung in einer gewissen Distanz unterhalb des Frischwassereinlasses (6) angeordnet ist und dessen Auslaßöffnung außerhalb der Anlage in einer Höhe mit deren Boden endet, und daß die Dimension des Kanals (13) im wesentlichen größer ist als die des Frischwassereinlasses (6) der Frischwassereinheit (2).

5. Anlage nach Anspruch 4, dadurch gekennzeichnet, daß im Kanal (13) ein Ventilationsrohr (14) vorgesehen ist, dessen eine Öffnung auf einem Niveau oberhalb des Frischwassereinlasses (6) der Frischwassereinheit (2) endet und dessen andere Öffnung in einem Niveau unterhalb der Auslaßöffnung dieses Kanals endet.

6. Anlage nach einem der vorhergehenden Ansprüche, dadurch gekennzeichnet, daß ein Auslaß (7) zum Zuführen von Frischwasser aus der Frischwassereinheit (2) zur Produktionseinheit (3) am Boden der Frischwassereinheit angeordnet ist.

7. Anlage nach einem der vorhergehenden Ansprüche, gekennzeichnet durch das Vorsehen eines Gitters (18) im oberen Teil der Produktionseinheit zur Verteilung des von oben zugeführten Salzes.

## Revendications

1. Installation pour la préparation d'une solution de NaCl comprenant une unité de production (3) présentant un lit de sel (10) et une unité de stockage (4) pour la solution saline préparée, caractérisée en ce que
une unité d'eau fraîche (2) pour stocker de l'eau fraîche est prévue dans l'installation ;
une entrée (6) pour introduire de l'eau fraîche dans l'unité d'eau fraîche (2) est disposée à une certaine distance au-dessus du niveau d'eau fraîche maximal qui est déterminé par un dispositif de réglage de niveau (13, 13a, 14) ;
une entrée (9) pour amener de l'eau fraîche de l'unité d'eau fraîche (2) vers l'unité de production (3) est disposée au fond de l'unité de production ;
une pompe (8) est disposée pour pomper de l'eau fraîche de l'unité d'eau fraîche (2) et dans l'unité de production (3), vers le haut à travers le lit de sel (10), de sorte qu'est produite en continu une solution de NaCl saturée,
une sortie (11) pour amener la solution de NaCl préparée de l'unité de production (3) vers l'unité de stockage (4) comprend un orifice de sortie (19) dans la partie supérieure de l'unité de production et une cage (20) munie d'une ouverture dirigée vers le bas disposée en dessous dudit orifice ; et
un moyen de séparation (21) s'étend vers le bas dans l'unité de production jusqu'à un niveau en dessous de l'orifice de sortie (19), de telle sorte que le niveau du lit de sel peut être disposé au-dessus du niveau du liquide.

2. Installation selon la revendication 1, caractérisée en ce que le moyen de séparation (21) comprend un panier qui n'a pas de fond et qui s'étend à partir de la partie supérieure de l'unité de production.

3. Installation selon la revendication 1 ou 2, caractérisée en ce que l'entrée de l'unité de production (9) pour l'eau fraîche est un tuyau (15) dont la partie supérieure est munie de trous allongés dans la direction longitudinale, un écran semi-circulaire (16) étant disposé au-dessus dudit tuyau et s'étendant dans la direction longitudinale de celui-ci.

4. Installation selon l'une quelconque des revendications précédentes, caractérisée en ce que le dispositif de réglage de niveau comprend une rigole d'écoulement (13) qui présente un débordement (13a) dont l'ouverture d'entrée est disposée à une certaine distance en dessous de l'entrée d'eau fraîche (6) et dont l'ouverture de sortie se termine à l'extérieur de l'installation, sur un niveau avec le fond de celle-ci et en ce que la dimension de la rigole d'écoulement (13) est sensiblement plus grande que celle de l'entrée d'eau fraîche (6) de l'unité d'eau fraîche (2).

5. Installation selon la revendication 4, caractérisée par la présence dans la rigole d'écoulement (13) d'un tube de ventilation (14) dont une ouverture se termine sur un niveau au-dessus de l'entrée d'eau fraîche (6) de l'unité d'eau fraîche (2) et dont l'autre ouverture se termine sur un niveau en dessous de l'ouverture de sortie de ladite rigole d'écoulement.

6. Installation selon l'une quelconque des revendications précédentes, caractérisée en ce qu'une sortie (7) pour amener l'eau fraîche de l'unité d'eau fraîche (2) vers l'unité de production (3) est disposée au fond de l'unité d'eau fraîche.

7. Installation selon l'une quelconque des revendications précédentes, caractérisée par la présence dans la partie supérieure de l'unité de production d'un grillage (18) pour la distribution du sel introduit à partir du haut.
